(19) Europäisches Patentamt

European Patent Office

Office européen des brevets

(11) Veröffentlichungsnummer: **0 253 311 B1**

(12) **EUROPÄISCHE PATENTSCHRIFT**

(45) Veröffentlichungstag der Patentschrift: **20.05.92**

(21) Anmeldenummer: **87109920.6**

(22) Anmeldetag: **09.07.87**

(51) Int. Cl.⁵: **G11B 23/113**

(54) Vorrichtung zum Aufwickeln eines Aufzeichnungsträgers auf ein Spulenpaar.

(30) Priorität: **18.07.86 DE 3624305**

(43) Veröffentlichungstag der Anmeldung:
**20.01.88 Patentblatt 88/03**

(45) Bekanntmachung des Hinweises auf die
Patenterteilung:
**20.05.92 Patentblatt 92/21**

(84) Benannte Vertragsstaaten:
**CH DE FR GB IT LI NL**

(56) Entgegenhaltungen:
**GB-A- 2 112 353**
**GB-A- 2 112 748**

(73) Patentinhaber: **BASF Magnetics GmbH**
**Gottlieb-Daimler-Strasse 10**
**W-6800 Mannheim(DE)**

(72) Erfinder: **Toral, José**
**Stiftsbogen 162**
**W-8000 München 70(DE)**
Erfinder: **Lutz, Gottfried**
**Lochhammerstrasse 105**
**W-8000 München 71(DE)**

(74) Vertreter: **Münch, Volker et al**
**BASF Aktiengesellschaft Patentabteilung-C6**
**ZSP/A**
**W-6700 Ludwigshafen(DE)**

**Beschreibung**

Die Erfindung bezieht sich auf eine selbsttätig ablaufende Vorrichtung zum Aufwickeln eines Aufzeichnungsträgers, insbesondere eines Videobandes auf ein Spulenpaar.

Heutzutage werden Video-Cassetten in großer Stückzahl produziert, daher ist es von Bedeutung, daß die einzelnen Herstellungsschritte rationell und mit wenig Ausschuß getätigt werden. Bei dem Bewickeln eines Spulenpaares mit Magnetband und anschließender Bestückung einer Video-Cassette werden einige Fabrikationsschritte noch manuell durchgeführt, was unrationell ist. Weiterhin ist es wünschenswert, daß ein Spulenpaar in dem Zustand überführt wird, in dem die beiden Spulen eng beieinander liegen, wenn sie auf einem Behälter befestigt sind und überführt werden, wenn sie nach dem Passieren der Aufwickeleinrichtung in das Gehäuse einer Video-Cassette eingesetzt werden, ebenso. Dem widerspricht jedoch die Forderung, daß die beiden Spulen möglichst weit auseinander liegen sollen, um sie fabrikationssicher mit Magnetband zu bewickeln.

Aus den DE-OS 32 46 434 sowie 32 46 471 sind selbsttätig ablaufende Vorrichtungen zum Aufwickeln eines Videobandes auf ein Spulenpaar bekannt. Nach der Lehre dieser Druckschriften wird ein Spulenpaar, welches durch Vorlaufband verbunden ist und das sich in einem Behälter, der auf einem Förderband taktweise befördert wird, befindet, aus seiner waagrechten Position vor Erreichen der Zuführstelle durch Drehen um 90° in den senkrechten Zustand überführt. Dann wird das Spulenpaar von einem Greifersystem aufgenommen und mittels eines Dreharmes um 180° gedreht und auf das Achsenpaar einer Aufwickelvorrichtung gesteckt, wobei eine Achse beweglich ist. Durch Verschieben der beweglichen Achse, wobei ein Teil des Vorlaufbandes abgewickelt wird, kann das Spulenpaar in eine Position gebracht werden, in der das Vorlaufband dürchgeschnitten, das Magnetband angeklebt, aufgewickelt und nach Erreichen der gewünschten Länge abgeschnitten und wieder an das Vorlaufband angeklebt wird. Darauf wird durch Verschieben der beweglichen Achse der ursprüngliche Abstand der Spulen hergestellt, das Greifersystem des Dreharmes ergreift das Spulenpaar und fördert es zur Zuführstelle zurück. Die geschilderte Abfolge der Betriebsablaufschritte macht plausibel, daß besonders die geschilderte Zuführeinrichtung relativ kompliziert und zeitaufwendig arbeitet und zudem eine große Anzahl beweglicher dem Verschleiß unterworfener Teile besitzt. Außerdem besteht die Gefahr, daß das Greifersystem beim Transport und Wickelvorgang das Magnetband beschädigt.

Es bestand daher die Aufgabe, eine selbsttätig arbeitende Vorrichtung zum Aufwickeln eines Bandes auf Spulen für eine Cassette zu schaffen, welche die oben geschilderten Nachteile vermeidet.

Die Aufgabe wurde erfindungsgemäß mit einer Vorrichtung gemäß Anspruch 1, gelöst. Eine derartige Vorrichtung arbeitet, wie aus der nachfolgenden Beschreibung hervorgeht, gegenüber den bekannten Vorrichtungen zeitsparender, da teilweise die Abfolgeschritte der Zuführeinrichtung nicht nacheinander, sondern gleichzeitig ablaufen und ist außerdem durch ihre technische Lösung sicher, weniger verschleißanfällig und zudem relativ einfach aufgebaut.

Die Erfindung wird nachfolgend anhand der Schemazeichnungen näher erläutert und zwar zeigen

| | |
|---|---|
| Figur 1 und 2 | eine Vorder- beziehungsweise Seitenansicht eines Beispiels der erfindungsgemäßen Vorrichtung zum Aufwickeln eines Aufzeichnungsträgers auf ein Spulenpaar |
| Figur 3 und 4 | Vorderansichten der erfindungsgemäßen Einrichtung zur Überführung eines Spulenpaares zur Aufwickelvorrichtung in zwei verschiedenen Positionen des Dreharms und der Halteelemente mit aufgesetzten Spulen |
| Figur 5 bis 19 | schematische Ansichten mit der Darstellung der Ablaufschritte des erfindungsgemäßen Überführungsverfahrens und des Aufwickelverfahrens. |

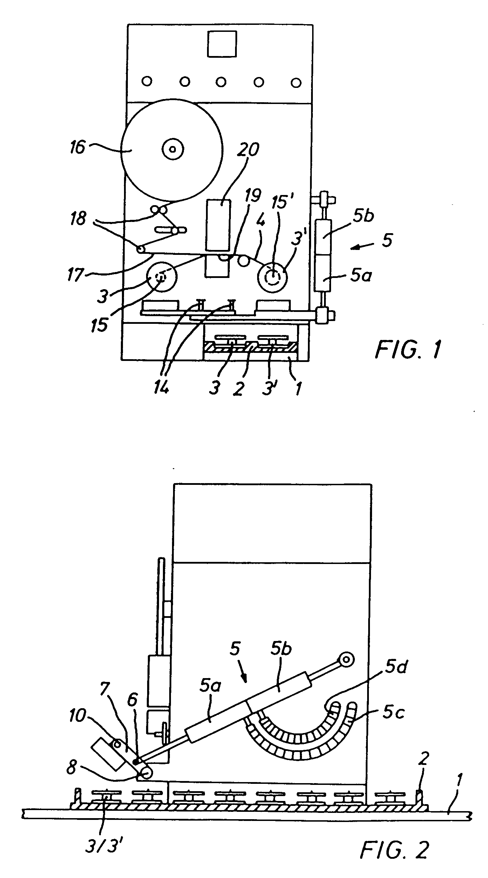

Eine Vorrichtung zum Aufwickeln eines Aufzeichnungsträgers auf einem Spulenpaar entsprechend den Figuren 1 und 2 umfaßt im wesentlichen

- eine Zuführ- und Abführeinrichtung für Behälter, die ein beispielsweise mit Vorlaufband bewickeltes Spulenpaar enthalten
- eine Einrichtung zur Überführung eines Spulenpaares auf die Aufwickelvorrichtung
- eine Aufwickelvorrichtung, bei der beispielsweise ein Magnetband mit beiden Spulen des Spulenpaares verbunden wird, ein sogenannter Winder.

Erfindungsgemäß beansprucht wird lediglich die Überführungseinrichtung, während die Zu- und Abführeinrichtung sowie die Aufwickeleinrichtung den Stand der Technik darstellen.

Die Zu- und Abführeinrichtung umfaßt ein Förderband (1), auf dem ein Behälter (2) taktförmig transportiert wird, in welchem sich eine Anzahl Spulenpaare (3, 3') in der Ebene des Förderbandes befinden. Auf die Spulen ist bereits ein Vorlaufband (4) gewickelt. Vorzugsweise ist der Behälter (2) so ausgestaltet, daß der Abstand der Spulen (3, 3') so wie später in der Magnetbandcassette vorhanden ist.

Die erfindungsgemäße Überführungseinrichtung umfaßt als erstes einen beweglichen zweistufigen Zylinder (5). Dieser enthält zwei gegeneinander arbeitende Kolben (5a, 5b), wobei der eine Kolben (5b) sich über eine Stange an der Seitenwand der Aufwickelvorrichtung abstützt und der andere Kolben (5a) ebenfalls über eine Stange etwa in der Mitte des schwenkbaren Armes (7) im Stützpunkt (6) angreift. Dadurch sind drei Raststellungen des Zylinders gegeben:

    a) beide Kolben eingefahren
    b) ein Kolben ausgefahren
    c) beide Kolben ausgefahren.

Die Betätigung der beiden Kolben erfolgt beispielsweise pneumatisch über die Zuführleitungen 5c/5d.

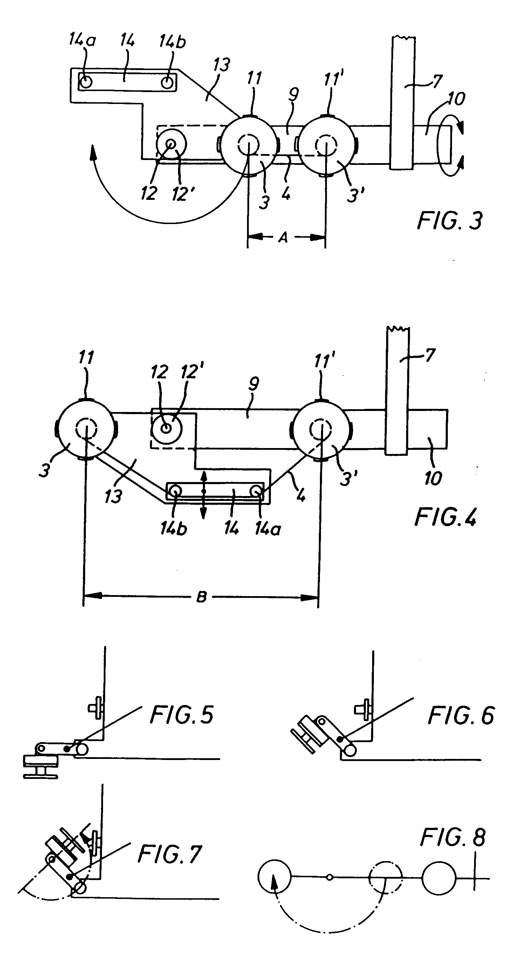

Der Drehpunkt (8) des Armes (7) ist ebenfalls an der Seitenwand der Aufwickelvorrichtung gelagert. Am freien Ende des Armes (7) ist, wie aus den Figuren 3 und 4 zu erkennen, parallel zur Drehachse des Armes (7) ein weiterer Arm (9) über einen Drehantrieb (10) drehbar gelagert. Benachbart zum Drehpunkt (10) befindet sich auf dem Arm (9) drehbar und motorisch antreibbar gelagert ein Halteelement (11') zum Aufnehmen einer Spule des Spulenpaares (3, 3'). Besonders bevorzugt als Halteelement ist ein zylindrischer Rundkörper, auf dessen zylindrischer Außenfläche gleichmäßig verteilt mehrere durch Luftdruck betätigbare radial verschiebbare Klauen, die gegen die Kraft einer den Außenumfang des Rundkörpers umspannenden Feder nach außen gedrückt werden, sitzen, und wobei zwischen den Klauen axial verschiebbare, durch Federn vorgespannte sogenannte Niederhalter angebracht sind, die den aufgesetzten Spulenflansch gegen das abgewinkelte Ende der Klauen drücken. Am freien Ende des Armes (9) ist über den Drehpunkt (12) ein Arm (13) mit der Drehvorrichtung (12') gelagert, wobei die Drehachse des Dreharmes (13) parallel zur Drehachse des Halteelements (11') verläuft. Der Dreharm (13) besitzt auf seinem einen Ende ein fest angebrachtes, nicht drehbares Halteelement (11), während auf seinem anderen Ende eine Führungseinrichtung (14) für das Band befestigt ist. Diese besteht aus zwei im Abstand befindlichen Führungsrollen (14a, 14b) mit seitlichen Flanschen. Die Führungseinrichtung (14) ist parallel zur Auflagefläche des Halteelements (11) verschiebbar. Die Position des Drehpunkts (12) auf dem Arm (9) sowie der Abstand des Drehpunkts (12) vom Halteelement (11) sind so bemessen, daß in der Position des geringsten Abstandes A (Figur 3) der Halteelemente (11, 11') dieser Abstand gleich dem Abstand des Spulenpaares (3, 3') im Behälter (2) ist und daß der maximale Abstand B (Figur 4) der Halteelemente (11, 11') gleich dem Abstand der Achsen (15, 15') der Aufwickelvorrichtung ist.

Die Aufwickelvorrichtung umfaßt ferner in an sich bekannter Weise eine Vorratsspule (16) für das Magnetband (17) sowie ein Zuführsystem (18), einen Tisch (19) zur Auflage des Bandes und eine Einrichtung (20), die einen Schneide- und Klebemechanismus enthält sowie die beweglichen Achsen (15, 15'), von denen mindestens eine Achse motorisch antreibbar ist.

Der Betrieb der Einrichtung zum Aufwickeln des Magnetbandes auf das Spulenpaar umfaßt das Wiederholen der nachfolgenden Schritte:

Das Förderband (1) transportiert den Behälter (2) durch entsprechende Steuerung, sei es mechanisch oder durch eine Fotozelle, in eine Position, bei der das Spulenpaar (3, 3') gerade unter der in Warteposition stehenden Überführungseinrichtung zu liegen kommt (Figur 2). Dann wird durch pneumatisches Ausstoßen des Kolbens (5b) der Arm (7) nach unten geschwenkt (Figur 5), wobei zu diesem Zeitpunkt der am Arm (9) befestigte Dreharm (13) die in Figur 3 dargestellte Position einnimmt, so daß die Halteelemente (11, 11') den minimalen Abstand A besitzen. Die Halteelemente ergreifen das Spulenpaar mit dem zwischen ihm gewickelten Vorlaufband (4), heben es aus dem Behälter durch Einziehen des Kolbens (5b) (Figur 6). Darauf dreht der Drehantrieb (10) den Arm (9) um 180°, worauf die ursprünglich nach unten weisenden Spulen jetzt nach oben gerichtet sind (Figur 7). Dann schwenkt der an der Drehachse (12) befindliche Drehantrieb (12') den Dreharm (13) (Figur 8) um 180° in die in Figur 4 dargestellte Position, so daß die Halteelemente (11, 11') mit den daran hängenden Spulen (3, 3') jetzt die maximale Entfernung B besitzen. Dabei erfaßt das Führungselement (14) mit seinen geflanschten Führungsrollen (14a, 14b) das Vorlaufband (4).

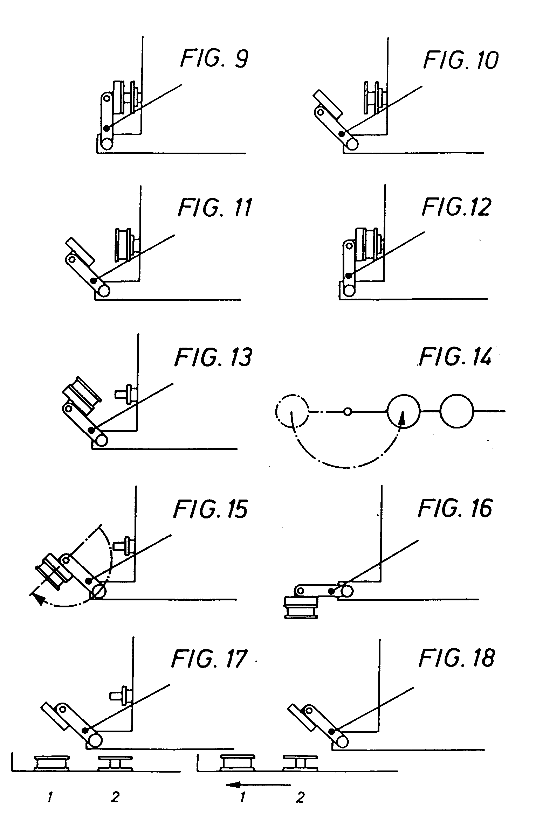

Während des Drehvorgangs wird das Vorlaufband (4) von der beweglich gelagerten Spule (3') abgewickelt. Nun wird der Schwenkarm (7) durch Betätigung des Kolbens (5a) zur Aufwickelvorrichtung hin bewegt (Figur 9), wobei das Spulenpaar auf die Achsen (15, 15') aufgesteckt wird. Während des Einschwenkens wird die Führungseinrichtung (14) nach oben bewegt, wobei das Vorlaufband (4), welches zwischen den Flanschen der Führungsrollen (14a, 14b) liegt, zwischen den Auflagetisch (19) und die Schneide- und Klebevorrichtung (20) geschoben wird. Nach Absenken der Führungseinrichtung (14) liegt das Vorlaufband (4) auf dem Auflagetisch, der Arm (7) wird durch Betätigung des Kolbens (5a) von der Achse (15, 15') weggeschwenkt (Figur 10) und bleibt dort in Warteposition. Der Aufwickelvorgang beginnt. Dies kann wie in an sich bekannter Weise ablaufen, nämlich Abschneiden des Vorlaufbandes (4) und Ankleben des Magnetbandes (17) durch die entsprechende Vorrichtung (20), Aufwickeln des Magnetbandes auf der Spule (3') bis zur gewünschten Länge, Abschneiden des Magnetbandes (17) und Ankleben des Restes des Vorlaufbandes, das sich auf der Spule (3) befindet.

Nachdem so der komplette Wickel fertiggestellt ist (Figur 11), laufen die oben geschilderten Vorgänge allerdings in umgekehrter Reihenfolge, wieder ab. Der Arm (7) mit den Halteelementen nimmt das Spulenpaar ab, gleichzeitig hebt die Führungseinrichtung das Band vom Auflagetisch ab (Figuren 12 bis 13). Der Dreharm (13) dreht zurück (Figur 14) in die in Figur 3 dargestellte Position, gleichzeitig wickelt das antreibbare Halteelement (11') das Vorlaufband (4) auf die Spule (3') auf, bis das Band zwischen den Spulen nicht mehr durchhängt. Der Antrieb des Halteelements (11') kann unterschiedlich erfolgen, beispielsweise durch Druckluft, durch einen Elektromotor oder durch Übertragung der Drehung der Drehachse (12') beispielsweise über einen Keilriemen auf die Achse des Halteelements. Dann wird der Dreharm (9) um 180° (Figur 15) gedreht, worauf der Schwenkarm (7) durch entsprechende Betätigung der Kolben in waagrechte Position fährt und die Halteelemente das Spulenpaar in seine vorige Lage im Behälter (2) absetzen (Figur 16). Der Behälter rückt darauf um eine Position vor (Figur 17), so daß das nachfolgende Spulenpaar unter der Überführungseinrichtung zu liegen kommt, und der geschilderte Vorgang wiederholt sich (Figur18).

Neben den bereits geschilderten Vorteilen bietet die erfindungsgemäße Überführungseinrichtung noch den Vorzug, daß sie ohne weiteres mit vertretbaren Kosten an eine dem Stand der Technik entsprechende Aufwickeleinrichtung, auf die das Spulenpaar bisher per Hand aufgesteckt und dabei das Vorlaufband eingeschoben werden mußte, angebaut werden kann. Auf diese Weise ist nicht der kostspielige Neubau einer kompletten selbsttätig arbeitenden Vorrichtung zum Bewickeln eines Spulenpaares mit Magnetband erforderlich.

Selbstverständlich sind auch Varianten der geschilderten erfindungsgemäßen Vorrichtung und der Abfolge der Betriebsabläufe möglich. So kann beispielsweise auch mit einer einfachen Zusatzeinrichtung das Spulenpaar ohne dazwischen befindliches Vorlaufband angeliefert und bewickelt werden.

**Patentansprüche**

1. Selbsttätig arbeitende Vorrichtung zum Aufwickeln eines Aufzeichnungsträgers, insbesondere eines Videobandes, auf ein Spulenpaar, enthaltend eine Zuführ- und Abführeinrichtung (1) für mit Vorlaufband (4) verbundene Spulenpaare (3,3') sowie eine Einrichtung zur Überführung eines Spulenpaares, das abnehmbar in einem Behälter (2) steckt, zu einer Aufwickelvorrichtung mit Hilfe zweier die Spulen greifender Halteelemente (11,11') mit Hilfe eines Dreharmes (7) sowie weiterer Übertragungselemente (14), wobei die Aufwickeleinrichtung zwei Achsen (15,15'), umfaßt, auf der die Spulen (3,3') abnehmbar befestigbar sind und die Aufwickelvorrichtung Einrichtungen (19,20) enthält, die das zwischen den Spulen (3,3') befindliche Vorlaufband (4) mit dem Aufzeichnungsträger verbinden und die Zuführstelle der Überführungseinrichtung, zu der im Behälter steckende Spulen zugeführt werden, die selbe Stelle ist wie die Abgabestelle, an der die Spulen von der Aufwickeleinrichtung abgegeben werden, dadurch gekennzeichnet, daß die Überführungseinrichtung einen zweistufigen betätigbaren Zylinder (5) enthält, dessen Kolben (5a, 5b) über einen Angriffspunkt (6) einen schwenkbaren Arm (7) betätigen, an dessen freiem Ende (10) senkrecht zum schwenkbaren Arm (7) ein weiterer drehbar gelagerter motorisch antreibbarer Arm (9) vorhanden ist, auf dem ein drehbares, antreibbares Halteelement (11') für die eine Spule (3') des Spulenpaares sowie ein Dreharm (13) angebracht ist, dessen Drehebene parallel zur Auflagefläche der Halteelemente verläuft und auf dessen einem Ende ein Halteelement (11) für die andere Spule (3) des Spulenpaares sitzt und auf dessen anderem Ende sich ein parallel zur Auflagefläche des Halteelements (11) verschiebbares Führungselement (14) zum Einführen des zwischen den Spulen befindlichen Vorlaufbandes (4) in die Aufwickelvorrichtung befindet, wobei der Drehpunkt (12) des Dreharmes (13) so auf dem Arm (9) positioniert ist und wobei der Abstand des Drehpunktes (12) vom Halteelement (11) so gewählt ist, daß die minimale Entfernung A der beiden Halteelemente (11, 11') gleich dem Abstand des Spulenpaares im Behälter und die maximale Entfernung B der Halteelemente gleich der Entfernung der beiden Achsen (15, 15') der Aufwickelvorrichtung ist.

2. Vorrichtung nach Anspruch 1, dadurch gekennzeichnet, daß der Zylinder (5) zwei gegeneinander arbeitende Kolben (5a, 5b) enthält, die über die Leitungen (5c, 5d) mit Druckluft beaufschlagbar sind.

3. Vorrichtung nach Anspruch 1 - 2, dadurch gekennzeichnet, daß der Zylinder (5) und/oder die drehbaren Arme (9, 13) und/oder das drehbare Halteelement (11') durch Druckluft betätigt werden.

4. Vorrichtung nach den Ansprüchen 1 - 3, dadurch gekennzeichnet, daß die Halteelemente (11, 11') dann den minimalen Abstand A besitzen, wenn die Halteelemente zum Behälter (2) weisen und wenn beide Kolben (5a, 5b) voll ausgefahren sind und daß die Halteelemente dann den maximalen Abstand B besitzen, wenn sie den Achsen (15, 15') der Aufwickelvorrichtung zugekehrt sind und wenn mindestens einer der Kolben (5a, 5b) eingefahren ist.

5. Vorrichtung nach Anspruch 1 - 4, dadurch gekennzeichnet, daß das Halteelement (11') über einen Riemen durch die Drehvorrichtung (12') des Dreharms (13) angetrieben wird.

6. Vorrichtung nach Anspruch 1 - 5, dadurch gekennzeichnet, daß in der Stellung, bei der die Halteelemente (11, 11') bei Betätigung des Dreharmes (13) den maximalen Abstand B besitzen, die Führungseinrichtung (14) mit den geflanschten Rollen (14a, 14b) das Vorlaufband (4) aufnimmt.

7. Vorrichtung nach Anspruch 1 - 6, dadurch gekennzeichnet, daß der Hubbereich der Führungseinrichtung (14) so bemessen ist, daß die Rollen (14a, 14b) das Vorlaufband (4) auf dem Auflagetisch (19) der Aufwickeleinrichtung absetzen.

## Claims

1. Automatically operating apparatus for winding up a recording medium, in particular a video tape, onto a pair of reels, comprising a feeding and delivering device (1) for pairs of reels (3, 3') joined to leader tape (4), as well as a device for transporting a pair of reels, removably fitted in a receptacle (2), to a winding apparatus with the aid of two holding elements (11, 11'), gripping the reels, and with the aid of a pivoting arm (7) as well as further transfer elements (14), the winding apparatus comprising two spindles (15, 15'), on which the reels (3, 3') can be removably fastened, and the winding apparatus including devices (19, 20) which join the leader tape (4), located between the reels (3, 3'), to the recording medium, and the feeding point of the transporting device, to which the reels fitted in the receptacle are fed, being the same point as the delivery point, at which the reels are delivered by the winding apparatus, wherein the transporting device includes a two-stage operable cylinder (5), the pistons (5a, 5b) of which operate via a point of application (6) a swivelling arm (7), at the free end (10) of which there is perpendicular to the swivelling arm (7) a further pivotably mounted motor-driveable arm (9), on which there is attached a pivotable, driveable holding element (11') for the one reel (3') of the pair of reels as well as a pivoting arm (13), the pivoting plane of which runs parallel to the bearing surface of the holding elements and on the one end of which there is seated a holding element (11) for the other reel (3) of the pair of reels and on the other end of which there is located a guide element (14), displaceable parallel to the bearing surface of the holding element (11), for introducing the leader tape (4), located between the reels, into the winding apparatus, the pivoting point (12) of the pivoting arm (13) being positioned on the arm (9) in such a way and the spacing of the pivoting point (12) from the holding element (11) being chosen in such a way that the minimum distance A between the two holding elements (11, 11') is equal to the spacing of the pair of reels in the receptacle and the maximum distance B between the holding elements is equal to the distance between the two spindles (15, 15') of the winding apparatus.

2. Apparatus as claimed in claim 1, wherein the cylinder (5) includes two counter-operating pistons (5a, 5b), which can be actuated with compressed air via the lines (5c, 5d).

3. Apparatus as claimed in either claim 1 or claim 2, wherein the cylinder (5) and/or the pivotable arms (9, 13) and/or the pivotable holding element (11') are operated by compressed air.

4. Apparatus as claimed in any of claims 1 to 3, wherein the holding elements (11, 11') have the minimum spacing A when the holding elements point toward the receptacle (2) and when both pistons (5a, 5b) are fully extended and wherein the holding elements have the maximum spacing B when they are facing the spindles (15, 15') of the winding apparatus and when at least one of the pistons (5a, 5b) is retracted.

5. Apparatus as claimed in any of claims 1 to 4, wherein the holding element (11') is driven via a belt by the pivoting apparatus (12') of the pivoting am (13).

6. Apparatus as claimed in any of claims 1 to 5, wherein, in the position in which the holding elements (11, 11') have the maximum spacing B upon operation of the pivoting arm (13), the guide device (14) picks up the leader tape (4) with the flanged rollers (14a, 14b).

7. Apparatus as claimed in any of claims 1 to 6, wherein the lifting range of the guide device (14) is dimensioned in such a way that the rollers (14a, 14b) set down the leader tape (4) on the supporting table (19) of the winding apparatus.

**Revendications**

1. Appareil automatique pour l'enroulement d'un support d'enregistrement, en particulier d'une bande vidéo, sur une paire de bobines, contenant un dispositif d'amenée et d'évacuation (1) pour des paires de bobines (3,3') jointes à une amorce (4) et un dispositif de transfert d'une paire de bobines, placée de manière amovible dans un récipient (2) à un appareil d'enroulement à l'aide de deux éléments de retenue (11,11') saisissant les bobines et à l'aide d'un bras tournant (7) ainsi que d'autres éléments de transmission (14), le dispositif d'enroulement comprenant deux axes (15,15') sur lesquels les bobines (3,3') peuvent être fixées de manière amovible et l'appareil d'enroulement contenant des dispositifs (19,20) qui unissent au support d'enregistrement l'amorce (4) se trouvant entre les bobines (3,3'), et l'endroit d'amenée du dispositif de transfert auquel sont amenées des bobines placées dans le récipient étant le même que l'endroit de délivrance où les bobines sont émises du dispositif d'enroulement, caractérisé par le fait que le dispositif de transfert contient un vérin actionnable à deux étages (5) dont les pistons (5a,5b) actionnent, par l'intermédiaire d'un point d'attaque (6), un bras basculant (7) à l'extrémité libre (10) duquel existe, perpendiculairement à lui, un autre bras (9) monté tournant et actionnable par moteur sur lequel sont montés un élément de retenue tournant actionnable (11') pour une bobine (3') de la paire de bobines et un bras tournant (13) dont le plan de rotation est parallèle à la surface d'appui des éléments de retenue et sur une extrémité duquel est monté un élément de support (11) pour l'autre bobine (3) de la paire de bobines et sur l'autre extrémité duquel se trouve un élément de guidage (14) mobile parallèlement à la surface d'appui de l'élément de retenue (11) pour l'introduction dans l'appareil d'enroulement de l'amorce (4) se trouvant entre les bobines, l'axe de rotation (12) du bras tournant (13) étant positionné sur le bras (9) et la distance entre cet axe de rotation (12) et l'élément de retenue (11) choisie de façon que la distance minimale A entre les deux éléments de retenue (11, 11') soit égale à l'écartement de la paire de bobines dans le récipient et que la distance maximale B entre les éléments de retenue soit égale à la distance entre les deux axes (15,15') de l'appareil d'enroulement.

2. Appareil selon la revendication 1, caractérisé par le fait que le vérin (5) contient deux pistons (5a,5b) travaillant en sens inverse l'un de l'autre, qui peuvent être soumis à l'action d'air comprimé par des conduites (5c,5d).

3. Appareil selon les revendications 1 et 2, caractérisé par le fait que le vérin (5) et/ou les bras tournants (9,13) et/ou l'élément de retenue tournant (11') sont actionnés à l'air comprimé.

4. Appareil selon les revendications 1 à 3, caractérisé par le fait que les éléments de retenue (11,11') ont l'écartement minimal A lorsqu'ils sont dirigés vers le récipient (2) et que les deux pistons (5a,5b) sont complètement sortis, et qu'ils ont l'écartement maximal a lorsque les axes (15,15') sont dirigés vers l'appareil d'enroulement et qu'au moins un des pistons (5a,5b) est rentré.

5. Appareil selon les revendications 1 à 4, caractérisé par le fait que l'élément de retenue (11') est entraîné, par l'intermédiaire d'une courroie, par l'appareil de rotation (12') du bras tournant (13).

6. Appareil selon les revendications 1 à 5, caractérisé par le fait que dans la position où les éléments de retenue (11,11') ont en cas d'actionnement du bras tournant (13) l'écartement maximal B, le dispositif de guidage (14) reçoit l'amorce (4) par les galets à joues (14a,14b).

7. Appareil selon les revendications 1 à 6, caractérisé par le fait que le domaine de course du dispositif de guidage (14) est dimensionné de façon que les galets (14a,14b) déposent l'amorce (4) sur la table d'appui (19) du dispositif d'enroulement.

FIG. 1

FIG. 2

FIG. 3

FIG.4

FIG.5

FIG.6

FIG.7

FIG.8

FIG. 9

FIG. 10

FIG. 11

FIG. 12

FIG. 13

FIG. 14

FIG. 15

FIG. 16

FIG. 17

FIG. 18

1     2          1     2